(19) Europäisches Patentamt
European Patent Office
Office européen des brevets

(11) **EP 2 605 444 A1**

(12) **EUROPEAN PATENT APPLICATION**

(43) Date of publication:
**19.06.2013 Bulletin 2013/25**

(51) Int Cl.:
**H04L 9/00** (2006.01)

(21) Application number: **11306692.2**

(22) Date of filing: **16.12.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gemalto SA
92190 Meudon (FR)**

(72) Inventors:
• **Salgado, Stéphanie
92190 MEUDON (FR)**
• **Vigilant, David
92190 MEUDON (FR)**
• **Leveque, Sylvain
92190 MEUDON (FR)**

(54) **Method for signing or deciphering a message using CRT RSA resisting Differential Side-Channel Analysis**

(57) The present invention relates to a cryptographic method for applying a private operation of the RSA algorithm on a message m, in an electronic device, with a RSA algorithm using two different prime integers p and q, said method comprising the steps of:
- generating a first value Sp by applying a first modular exponentiation on the message m with a first private exponent and with the modulus p;
- generating a second value Sq by applying a second modular exponentiation on the message m with a second private exponent and with the modulus q;
characterized in that said cryptographic method further comprises a step of :
- generating a final value by recombining the first value Sp and the second value Sq, said final value being equivalent to $Sq+q*(q_{inv}.(Sp-Sq) \bmod p)$ with $q_{inv} = q^{-1} \bmod p$, said final value comprising at least two terms whose lengths are identical and equal to the length of p plus the length of q.

FIG. 2

GENERAT_S(Sp, Sq, $q_{inv}$, p, q)

$$S=(Sp*q*q_{inv}+Sq*p*p_{inv}) \bmod p*q$$

A1   A2

$$S=Sq+q\Sigma Ai$$

EP 2 605 444 A1

**Description**

**TECHNICAL FIELD**

The present invention relates to a cryptographic method for applying a private operation of the RSA algorithm on a message m, in an electronic device, using two different prime integers p and q. The invention also relates to an electronic device for carrying out said method.

Such a method may be used in a non-limitative example in smart cards which are used for exchanging reliable data with a terminal.

**BACKGROUND OF THE INVENTION**

Cryptographic methods for applying a private operation of the RSA algorithm on a message m, in an electronic device, using two different prime integers p and q are well known by the man skilled in the art. The RSA algorithm is an asymmetric algorithm which uses a public key and a private key. The private operations of the RSA algorithm are the signing which uses the private key, and the deciphering which also uses the private key.

When signing a message, a signature of the message is computed with the private key at a transmitter side such as a smart card for example. The signature is verified at a receiver side with the public key.

When ciphering a message, a cipher text of the message is computed with the public key of the receiver at a transmitter side. The cipher text is deciphered with the private key at a receiver side such as a smart card for example. One of these methods uses the Chinese Remainder Theorem "CRT" associated with the RSA to speed up the RSA signature generation. According to this method, a first value Sp is computed by applying a modular exponentiation of the message using p, a second value Sq is computed by applying a modular exponentiation of the message using q, and a final value S is computed by recombining the first and second values, the final value S being equal to $S = Sq + q*(q_{inv}*(Sp-Sq) \mod p)$ where:

- $q_{inv} = q^{-1} \mod p$, with Sq, q, and $q_{inv}*(Sp-Sq) \mod p$ having a length of p,
- $X = q*(q_{inv}*(Sp-Sq)$ having a length of p plus length of q,
- and the final value S having a length of p plus length of q.

The final equation is often used for speed and memory performances.

One problem of this state of the art is that an attacker may perform Differential Side Channel Analysis "DSCA" attacks on the smart card to extract the data q which is the secret key element. A DSCA attack is based on statistical analysis of the varying power consumption of the smart card or the electromagnetic field of the smart card when executing the different cryptographic operations required during signing or deciphering.

During the computation of the sum of the two terms Sq and q*X, the term Sq has only effect on the low half-part of S, since Sq is about half the length of the modulus. The high half-part of the term q*X is exactly the same as the high half-part of S.

As the attacker has access to the final value S which is an output of the smart card in the case of the signature or knows the deciphered message in the case of deciphering, the attacker has access to the half high part of q*X. With the DSCA attacks he may vary the term X and guess the value of q. Thereafter he may make an estimation of q, from the most significant digit to the lower ones, compute an approximation of X = S/q , and then try to make a correlation between this estimation of X and the measures of the power consumption of the smart card or the electromagnetic field of the smart card. Having found q, the attacker may now recover p = n/q as well as all the other elements composing the RSA CRT secret key.

**SUMMARY OF THE INVENTION**

It is an object of the invention to provide a cryptographic method for applying a private operation of the RSA algorithm on a message m, in an electronic device, using two different prime integers p and q , which permits to prevent such DSCA attacks.

It is to be noted that DSCA attacks comprise DPA "Differential Power Analysis" and CPA "Correlation Power Analysis" attacks well-known by the man skilled in the art.

To this end, there is provided a cryptographic method for applying a private operation of the RSA algorithm on a message m, in an electronic device, using two different prime integers p and q, said method comprising the steps of:

- generating a first value Sp by applying a first modular exponentiation on the message m with a first private exponent and with a modulus p ;

- generating a second value Sq by applying a second modular exponentiation on the message m with a second private exponent and with a modulus q ;
  characterized in that said cryptographic method further comprises the step of:
- generating a final value by recombining the first value Sp and the second value Sq, said final value being equivalent to $Sq+q*(q_{inv}*(Sp-Sq) \bmod p)$ with $q_{inv} = q^{-1} \bmod p$, said final value comprising at least two terms whose lengths are identical and equal to the length of p plus the length of q.

As we will see in further details, the cryptographic method proposes to compute a final value which is composed of terms of the same length such that no term of the final value can be neglected in the equation. In this case, the value of the final value may not integrate directly the value of the q element. A DSCA attack will therefore fail.

In a first non-limitative embodiment, the final value comprises two terms and is equal to the sum of said two terms modulo n, where n=p*q, the first term being equal to $Sp*q*q_{inv} \bmod n$ and the second term being equal to $Sq*p*p_{inv} \bmod n$ with $p_{inv} = p^{-1} \bmod q$ and $q_{inv} = q^{-1} \bmod p$.

In a non-limitative embodiment, the second term of the final value is computed using the formula $p*p_{inv}=p*q+1-q*q_{inv}$. Indeed it may be more efficient to not compute directly $p_{inv}$ which is usually not available and requires a heavy computation.

In a second non-limitative embodiment, the final value is equal to second value Sq plus a sum modulo n of at least two terms said sum being multiplied by q, where the sum modulo p is equal to $q_{inv}*(Sp-Sq) \bmod p$ with $q_{inv} = q^{-1} \bmod p$.

In a first non-limitative embodiment, the private operation is a signing and the final value is a signature.

In a second non-limitative embodiment, the private operation is a deciphering and the final value is a deciphered message.

In addition, there is provided an electronic device for applying a private operation of the RSA algorithm on a message m using two different prime integers p and q, said electronic device comprising a unit processor adapted to:

- generate a first value Sp by applying a first modular exponentiation on the message m with a first private exponent and with a modulus p;
- generate a second value Sq by applying a second modular exponentiation on the message m with a second private exponent and with a modulus q ;
  characterized in that said unit processor is further adapted to:
- generate a final value by recombining the first value Sp and the second value Sq, said final value being equivalent to $Sq+q*(q_{inv}*(Sp-Sq) \bmod p)$ with $q_{inv} = q^{-1} \bmod p$, said final value comprising at least two terms whose lengths are identical and equal to the length of p plus the length of q.

In addition, there is provided a computer program product for a computer, comprising a set of instructions, which when loaded into said computer, causes the computer to carry out the cryptographic method for applying a private operation of the RSA algorithm on a message as characterized according to any above characteristics.

**BRIEF DESCRIPTION OF THE FIGURES**

Some embodiments of methods and/or apparatus in accordance with embodiments of the present invention are now described, by way of example only, and with reference to the accompanying drawings, in which:

- Fig.1 illustrates a schematic organization chart of the cryptographic method for applying a private operation of the RSA algorithm on a message according to a non-limitative embodiment of the invention;
- Fig.2 illustrates a first non-limitative embodiment and a second non-limitative embodiment of a step of computing a final value of the cryptographic method of Fig. 1; and
- Fig.3 illustrates schematically an electronic device which is adapted to carry out the method of Fig. 1.

**DESCRIPTION OF EMBODIMENTS OF THE INVENTION**

In the following description, well-known functions or constructions by the man skilled in the art are not described in detail since they would obscure the invention in unnecessary detail.

It may be recalled that, in the description, when an action is attributed to a microprocessor, an application or to a device comprising a microprocessor, this action is performed by the microprocessor controlled by instruction codes recorded in a memory of this device.

The present invention relates to a cryptographic method for applying a private operation OP of the RSA algorithm on a message m, in an electronic device, using two different prime integers p and q.

More particularly, a public key (e, n) and a private key (p, q, dp, dq, iq) are used, where n=p*q, e is the encryption exponent which is an integer such that GCD(e,(p-1)*(q-1))=1, d is the private decryption exponent such that e*d = 1 (mod(p-1)*(q-1)), dp = d mod (p-1), dq = d mod (q-1), iq = $q_{inv}$.

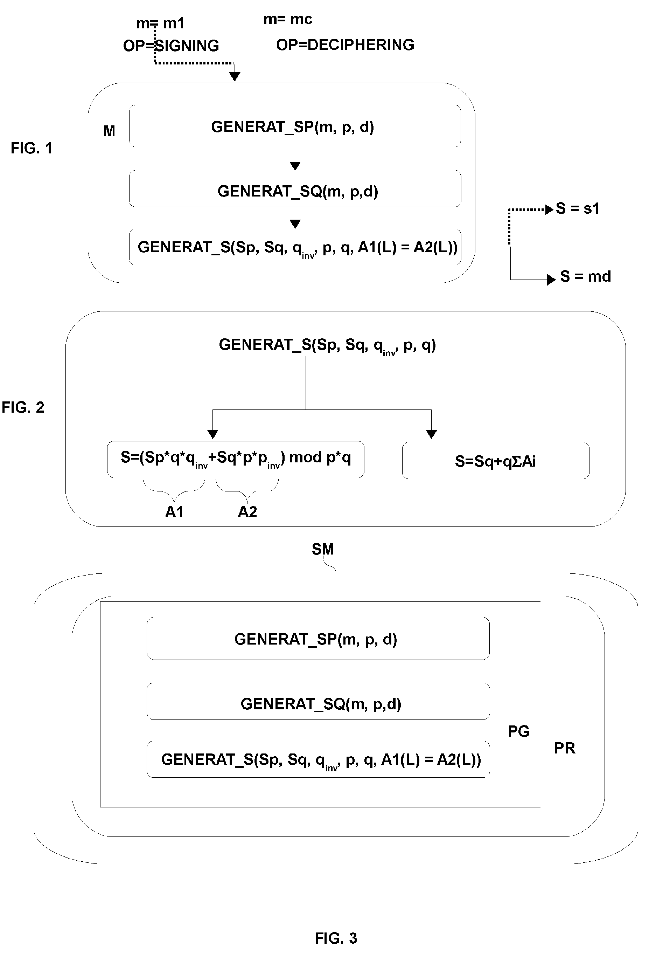

As illustrated in Fig. 1, said method comprises the following steps:

1) generating a first value Sp by applying a first exponentiation on the message m with a first private exponent d or dp and with a modulus p.

It is to be noted that the electronic device may typically store the elements d, p, iq and q, or store the elements dp, dq, iq, q and p. Therefore the first private exponent used is either d, either dp, and the second private exponent is either d, either dq.

Said first private exponent d or dp is based on p so that

Sp = $m^{d \bmod (p-1)}$ mod p= $m^{dp}$ mod p, with d or dp the private exponent (illustrated GENERAT_SP(m, p, d)).

2) generating a second value Sq by applying a second exponentiation on the message m with a first private exponent d or dq and with a modulus q.

Said second private exponent d or dq is based on q so that Sq = $m^{d \bmod (q-1)}$ mod q = $m^{dq}$ mod q, with d or dq the private exponent (illustrated GENERAT_SQ(m, q, d)).

It is to be noted that the first and the second steps may be performed in parallel or the second step may be performed before the first one.

3) generating a final value S by recombining the first value Sp and the second value Sq, said final value S being equivalent to Sq+q*($q_{inv}$*(Sp-Sq) mod p) with $q_{inv}$ = $q^{-1}$ mod p, said final value S comprising at least two terms Ai whose lengths L are identical and equal to the length of p plus the length of q (illustrated GENERAT_S(Sp, Sq, $q_{inv}$, p, q)).

By applying a private operation of the RSA algorithm, one means signing or deciphering.

In a first non-limitative embodiment, the private operation OP is a signing and the final value S is a signature s1. In this case, the message m is a plain text message m1 which is not ciphered, as illustrated in Fig. 1 in dotted line.

In a second non-limitative embodiment, the private operation is a deciphering and the final value S is a deciphered message md. In this case, the message m is a ciphered message which has to be deciphered with said method mc, as illustrated in Fig. 1.

Therefore, said method is applied either for signing a message, either for deciphering a message.

• First non-limitative embodiment

In a first non-limitative embodiment, the final value S comprises two terms A1, A2 and is equal to the sum of said two terms modulo n, where n=p*q, the first term A1 being equal to Sp*q*$q_{inv}$ mod n and the second term A2 being equal to Sq*p*$p_{inv}$ mod n with $p_{inv}$ = $p^{-1}$ mod q and $q_{inv}$ = $q^{-1}$ mod p.

Thus, the final value is equal to ((Sp*q*$q_{inv}$ mod n) + (Sq*p*$p_{inv}$ mod n)) mod n, equation referenced [EQ2].

With two terms being equal to the length of p plus the length of q, the high part of the signature is not directly exactly equal to a term q*X where X is computed during the RSA operation. Thus the private element q may not be directly recovered from the output signature by DSCA analysis.

With this first non-limitative embodiment, the two terms q and p are now totally symmetric and are balanced over the length in the computation of the final value S. Thus, an attacker cannot recover secret element using the described DSCA.

As will be described hereinafter, said equation is equivalent to the equation usually used for signing or deciphering a message which is Sq+q*($q_{inv}$.(Sp-Sq) mod p), equation referenced [EQ1].

Two demonstrations may be used to show the equivalence which will be described hereinafter. These demonstrations are based on the following mathematical basis, which are described below.

It is to be reminded that a prime number (or a prime) is a natural number greater than 1 that has no positive divisors other than 1 and itself.

Numbers are said to be coprime, if they have no common prime factor.

• Chinese Remainder Theorem "CRT"

According to this CRT, suppose $n_1$, $n_2$, ..., $n_k$ are positive integers which are pairwise coprime, the product of the integers n being equal to n = $n_1$*$n_2$* ... *$n_k$. Then, for any given sequence of integers $S_1$, $S_2$, ... , $S_k$, there exists a unique integer S modulo n such as :

$S = S_1 \bmod n_1,$
$S = S_2 \bmod n_2$
.....
$S = S_k \bmod n_k$

When applied with k = 2 and to p and q, it leads to:

p and q being coprime and n = p*q, then, for any integer Sp, Sq, there exists a unique integer S modulo n such that
S=Spmodp
S=Sqmodq

• Gauss Algorithm

If $N_i$ = n/$n_i$ = $n_1$*$n_2$*...$n_3$*$n_{i-1}$*$n_{i+1}$*....$n_k$ and $M_i$ = $N_i^{-1}$ mod $n_i$,  then the solution S of the CRT gives:

$$S = (\sum_{i=1}^{k} S_i * N_i * M_i) \bmod n$$

When applied with k = 2 and to p and q, it leads to:

S = (Sp*N1*M1+Sq*N2*M2) mod n

with

$$N_1 = n/p$$
$$= q$$

$$M_1 = N_1^{-1} \bmod p$$
$$= q^{-1} \bmod p$$

$$N_2 = n / q$$
$$= p$$

$$M2 = N_2^{-1} \bmod q$$
$$= p^{-1} \bmod q$$

Then the solution S of the CRT gives:

$$S = (S_p * q * (q^{-1} \bmod p) + S_q * p * (p^{-1} \bmod q)) \bmod n \qquad [1]$$

With $q_{inv} = q^{-1} \bmod p$
and $p_{inv} = p^{-1} \bmod q$,

Equation [1] leads to:

$$S = ((Sp*q*q_{inv} \bmod n) + (Sq*p*p_{inv} \bmod n)) \bmod n \qquad [2]$$

• Bézout modulo n identity

According to Bézout's identity, for two integers p and q which are coprime,
$p*u+q*v = 1$ where u and v are integers.

Therefore, according to Bézout modulo n identity, one wants (intends/seeks???) to prove that:

$$(p*p_{inv}+q*q_{inv}) \bmod n = 1$$

By definition

$$p*p_{inv} \bmod q = 1 \quad [3]$$

As a multiple of q* mod q = 0, one has q*qinv mod q = 0.

Equation [3] leads to:

$$(p*p_{inv}+q*q_{inv}) \bmod q = 1$$

This is equivalent to say that i exists such that:

$$p*p_{inv}+q*q_{inv} = 1 + j * q \qquad [4]$$

Indeed, (j*q) mod q = 0

Similarly, k exists such that:

$$p*p_{inv}+q*q_{inv} = 1 + k * p$$

Indeed, (k*q) mod q = 0

Consequently $1 + k * p = 1 + j * q$

That is $k * p = j * q$

As p and q are coprime, p divides j and q divides k. That is to say:

$$j = \alpha*p \qquad [5]$$

$$k = \beta*q$$

By applying equation [5] to equation [4], it leads to:

$$p*p_{inv}+q*q_{inv} = 1+ \alpha*p*q$$

$$p * p_{inv} + q * q_{inv} = 1 + \alpha * n$$

$$p * p_{inv} + q * q_{inv} = 1 + n \, |6]$$

$\alpha = 1$ as $p$, $p_{inv}$, $q$, $q_{inv} \neq \{0,1\}$ which leads to $\alpha \neq 0$

$q_{inv} < p$ and $p_{inv} < q$ which leads to $\alpha < 2$

Therefore, in a non-limitative embodiment, the second term A2 of the final value S is computed using this formula $p * p_{inv} = p * q + 1 - q * q_{inv}$,

With this formula, the term $p_{inv} = p^{-1} \bmod q$ does not have to be computed and therefore does not need to be memorized in the smart card. The memory used is therefore reduced.

It is to be noted that in the smart card, the following terms are usually memorized: p, q, dp, dq, iq=qinv.

From equation [6],

$$p * p_{inv} + q * q_{inv} = 1 + n$$
$$p * p_{inv} = 1 + n - q * q_{inv}$$
$$(p * p_{inv}) \bmod n = (1 + n - q * qinv) \bmod n$$
$$\text{As } p * p_{inv} < n, (p * p_{inv}) \bmod n = p * p_{inv}, \text{ therefore}$$

$$p * p_{inv} = (1 - q * q_{inv}) \bmod n \ [7]$$

• <u>First demonstration</u>

The first demonstration will show how from the equation [EQ2] one arrives to equation [EQ1] with [EQ2] such that $S = (Sp * q * q_{inv} + Sq * p * p_{inv}) \bmod n$, and [EQ1] such that $S = Sq + q * (q_{inv}.(Sp-Sq) \bmod p)$,

By applying equation [7] to equation [EQ2], this leads to:

$$S = (Sp * q * q_{inv} + Sq * (1 - q * q_{inv} \bmod n)) \bmod n$$
$$S = (Sp * q * q_{inv} + Sq * (1 - q * q_{inv})) \bmod n$$
$$S = (Sp * q * q_{inv} + Sq - Sq * q * q_{inv}) \bmod n$$
$$= (Sq + Sp * q * q_{inv} - Sq * q * q_{inv}) \bmod n$$
$$= (Sq + q * q_{inv}(Sp - Sq)) \bmod n$$
$$= Sq + (q * q_{inv}(Sp - Sq)) \bmod n$$
$$= Sq + q * (q_{inv}(Sp - Sq) \bmod p) \qquad [8]$$

The equation [8] is known as the Garner formula and is the equation [EQ1] described before.

• <u>Second demonstration</u>

This second demonstration is based on the CRT.

According to equation [EQ2] and Garner equation (8),

$$S1 = (Sp*q*q_{inv}+Sq*p*p_{inv}) \bmod n$$

$$S2 = Sq + q*(q_{inv}(Sp - Sq) \bmod p$$

One has to show that S1 = S2. To this end, one has to look at S1 mod p, S1 mod q, S2 mod p and S2 mod q.

$$
\begin{aligned}
S1 \bmod p \quad &= (Sp*q*q_{inv}+Sq*p*p_{inv}) \bmod n \bmod p \\
&= Sp*q* q_{inv} \bmod p + Sq*p*p_{inv} \bmod p \\
&= Sp*q* q_{inv} \bmod p \\
&= Sp*q* q_{inv} \bmod p
\end{aligned}
$$

As q*qinv = 1 mod p, this leads to:
$$
\begin{aligned}
&= Sp \bmod p \\
&= Sp
\end{aligned}
$$

$$
\begin{aligned}
S1 \bmod q \quad &= (Sp*q*q_{inv}+Sq*p*p_{inv}) \bmod n \bmod q \\
&= Sp*q* q_{inv} \bmod q + Sq*p*p_{inv} \bmod q \\
&= Sq*p*p_{inv} \bmod q \\
&= Sq \bmod q \\
&= Sq
\end{aligned}
$$

$$
\begin{aligned}
S2 \bmod p \quad &= (Sq+q*(q_{inv} (Sp - Sq)) \bmod p) \bmod p \\
&= Sq \bmod p + q*q_{inv}*Sp \bmod p - q*q_{inv}*Sq \bmod p
\end{aligned}
$$

As q*qinv = 1 mod p, this leads to:
$$
\begin{aligned}
&= Sq \bmod p + Sp \bmod p - Sq \bmod p \\
&= Sp \bmod p \\
&= Sp
\end{aligned}
$$

$$
\begin{aligned}
S2 \bmod q \quad &= (Sq+q*(q_{inv} (Sp - Sq)) \bmod p) \bmod q \\
\\
&= Sq \bmod q + q*q_{inv} (Sp - Sq) \bmod q \\
&= Sq \bmod q \\
&= Sq
\end{aligned}
$$

One has verified that for two integers S1 and S2 $\in$ [0, n-1], this leads to S1 mod p = S2 mod p and S1 mod q = S2 mod q.

By applying the CRT, there is uniqueness of the solution. So one can conclude that S1 = S2.

• Second non-limitative embodiment

In a second non-limitative embodiment, as illustrated in Fig. 2, the final value S is equal to the second value Sq plus a sum modulo n of at least two random terms Ai said sum being multiplied by q, where the sum modulo p is equal to $q_{inv}$ * (Sp-Sq) mod p with $q_{inv}$ = $q^{-1}$ mod p.

Therefore, the final value $S = \left(Sq + \sum_{i=1}^{n}(q*Ai)\right)$ mod n with

$$\sum_{i=1}^{n} Ai \bmod p = q_{inv} (Sp-Sq) \bmod p.$$

In other words, $q_{inv}$ (Sp-Sq) mod p has been split into different random components.

In a first non-limitative variant, $q_{inv}$ = x1+x2+...+xn with xi being random. In a non-limitative example, $q_{inv}$ = x1+x2 such that x1=$q_{inv}$ - r, with r a random value, and x2 = r.

In a second non-limitative variant, Sp = x1 +x2+... +xn with xi being random.

In a third non-limitative variant, Sq = x1+x2+...+xn with xi being random.

In a fourth non-limitative variant, Sq - Sp = x1+x2+...+xn with xi being random.

In other non-limitative variants, a combination of the previous variants may be used.

With this second embodiment, the term q*X of the equation [EQ1] has been decomposed in a plurality of terms $\sum_{i=1}^{n}(q*Ai)$, all q*Ai having the same length of the final value S, that is to say the sum of the length of q and the length of p.

As these terms q*Ai will change each time a final value S is computed, and as the terms q*Ai are of the same length of the final value S, an attacker would not be able to recover q with a DSCA of order (n-1) attack from analyzing the output final value S.

Moreover, as the term X of the equation [EQ1], which is now equal to $\sum_{i=1}^{n} Ai$, will never be computed as such and will neither be found in an intermediate computation (in a computation of Ai), one cannot recover q by estimating X.

It is to be noted that the modulo n permits to obtain a final value S which complies with the RSA algorithm standard.

Hence, with this cryptographic method, one avoids having the high part of the final value directly dependant of a product involving the private key.

The cryptographic method M is carried out by an electronic device SM as illustrated in Fig. 3. Said electronic device SM may be any cryptographic system adapted to performed cryptographic computations. In a non-limitative example, said electronic device is a smart card.

Said electronic device SM for applying a private operation of the RSA algorithm on a message m using two different prime integers p and q comprises a unit processor PR adapted to:

- generate a first value Sp by applying a first modular exponentiation on the message m with a first private exponent d or dp and with a modulus p ;
- generate a second value Sq by applying a second modular exponentiation on the message m with a second private exponent d or dq and with a modulus q;
- generate a final value S by recombining the first value Sp and the second value Sq, said final value S being equivalent to Sq+q*($q_{inv.}$(Sp-Sq).mod p) with $q_{inv}$ = $q^{-1}$.mod p, said final value S comprising at least two terms Ai whose lengths L are identical and equal to the length of p plus the length of q.

There are numerous ways of implementing functions of the cryptographic method M by means of items of hardware or software, or both, provided that a single item of hardware or software can carry out several functions. It does not exclude that an assembly of items of hardware or software or both carry out a function.

Said hardware or software items can be implemented in several manners, such as by means of wired electronic circuits or by means of a computer program product that is suitable programmed respectively. One or a plurality of computer program products PG can be contained in a computer or in the electronic device SM as illustrated in Fig. 3, said device comprising a unit processor PR, said unit processor being hardware or software items as above stated.

The computer program product PG comprises a set of instructions. Thus, said set of instructions contained, for example, in a computer programming memory or in a system memory, may cause the computer or the electronic device to carry out the different steps of the method M.

The set of instructions may be loaded into the programming memory by reading a data carrier such as, for example, a disk. A service provider can also make the set of instructions available via a communication network such as, for example, the Internet.

The functions of the various elements shown in the Fig. 3, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, and non volatile storage. Other hardware, conventional and/or custom, may also be included.

Hence, some embodiments of the invention may comprise one or a plurality of the following advantages:

- it is easy to implement ;
- it can be implemented within all processors ;
- the implementation's cost is low;
- contrary to the prior art, the signature is a result of a sum with at least two terms having lengths equal to the length of p plus the length of q.
- it permits to have a final value (signature or deciphering message) which is equivalent to the former final value usually used so that it can be implemented in the electronic devices which are already deployed with the former equation [EQ1].

## Claims

1. Cryptographic method (M) for applying a private operation (OP) of the RSA algorithm on a message m, in an electronic device (SM), using two different prime integers p and q, said method comprising the steps of

   - generating a first value Sp by applying a first modular exponentiation on the message m with a first private exponent (d, dp) and with a modulus p;
   - generating a second value Sq by applying a second modular exponentiation on the message m with a second private exponent (d, dq) and with a modulus q;
   **characterized in that** said cryptographic method further comprises the step of:
   - generating a final value (S) by recombining the first value Sp and the second value Sq, said final value (S) being equivalent to $Sq+q*(q_{inv}*(Sp-Sq) \bmod p)$ with $q_{inv} = q^{-1} \bmod p$, said final value (S) comprising at least two terms (Ai) whose lengths (L) which are identical and equal to the length of p plus the length of q.

2. Cryptographic method (M) as claimed in claim 1, wherein the final value (S) comprises two terms (A1, A2) and is equal to the sum of said two terms modulo n, where n=p*q, the first term (A1) being equal to $Sp*q*q_{inv} \bmod n$ and the second term (A2) being equal to $Sq*p*p_{inv} \bmod n$ with $p_{inv} = p^{-1} \bmod q$ and $q_{inv} = q^{-1} \bmod p$.

3. Cryptographic method as claimed in claim 2, wherein the second term (A2) of the final value (S) is computed using the formula $p*p_{inv}=p*q+1-q*q_{inv}$.

4. Cryptographic method (M) as claimed in claim 1, wherein the final value (S) is equal to the second value Sq plus a sum modulo n of at least two random terms (Ai) said sum being multiplied by q, where the sum modulo p is equal to $q_{inv} * (Sp-Sq) \bmod p$ with $q_{inv} = q^{-1} \bmod p$.

5. Cryptographic method (M) as claimed in any one of claims 1 to 4, wherein the private operation (OP) is a signing and the final value (S) is a signature (S1).

6. Cryptographic method (M) as claimed in any one of claims 1 to 4, wherein the private operation (OP) is a deciphering and the final value (S) is a deciphered message (Md).

7. An electronic device (SM) for applying a private operation of the RSA algorithm on a message m using two different prime integers p and q, said electronic device (SM) comprising a unit processor (PR) adapted to :

- generate a first value Sp by applying a first modular exponentiation on the message m with a first private exponent (d, dp) and with a modulus p;
- generate a second value Sq by applying a second modular exponentiation on the message m with a second private exponent (d, dq) and with a modulus q;
**characterized in that** said unit processor (PR) is further adapted to:
- generate a final value (S) by recombining the first value Sp and the second value Sq, said final value (S) being equivalent to Sq+q*($q_{inv}$.(Sp-Sq) mod p) with $q_{inv} = q^{-1}$ mod p, said final value (S) comprising at least two terms (Ai) whose lengths (L) are identical and equal to the length of p plus the length of q.

8. A computer program product (PG) for a computer, comprising a set of instructions, which when loaded into said computer, causes the computer to carry out the cryptographic method for applying a private operation of the RSA algorithm on a message m as claimed in any one of claims 1 to 6.

**FIG. 1**

m= m1
OP=SIGNING

m= mc
OP=DECIPHERING

M

GENERAT_SP(m, p, d)

GENERAT_SQ(m, p,d)

GENERAT_S(Sp, Sq, $q_{inv}$, p, q, A1(L) = A2(L))

S = s1

S = md

**FIG. 2**

GENERAT_S(Sp, Sq, $q_{inv}$, p, q)

S=(Sp*q*$q_{inv}$ +Sq*p*$p_{inv}$) mod p*q

A1    A2

S=Sq+qΣAi

SM

GENERAT_SP(m, p, d)

GENERAT_SQ(m, p,d)

GENERAT_S(Sp, Sq, $q_{inv}$, p, q, A1(L) = A2(L))

PG

PR

**FIG. 3**

Europäisches
Patentamt

European
Patent Office

Office européen
des brevets

**EUROPEAN SEARCH REPORT**

Application Number

EP 11 30 6692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 888 690 A1 (GEMPLUS SA [FR]) 19 January 2007 (2007-01-19) | 1,4-8 | INV. H04L9/00 |
| A | * pages 2,3,5-7; figures 6,2,5,7 * | 2,3 | |
| X | CHANGKYUN KIM ET AL: "A Secure and Practical CRT-Based RSA to Resist Side Channel Attacks", 23 April 2004 (2004-04-23), COMPUTATIONAL SCIENCE AND ITS APPLICATIONS Â ICCSA 2004; [LECTURE NOTES IN COMPUTER SCIENCE;;LNCS], SPRINGER-VERLAG, BERLIN/HEIDELBERG, PAGE(S) 150 - 158, XP019006751, ISBN: 978-3-540-22054-1 | 1-3,5-8 | |
| A | * section 2.1 * | 4 | |
| A | EP 1 291 763 A1 (ST MICROELECTRONICS SA [FR]) 12 March 2003 (2003-03-12) * the whole document * | 1-8 | |

TECHNICAL FIELDS
SEARCHED (IPC)

H04L

The present search report has been drawn up for all claims

| Place of search | Date of completion of the search | Examiner |
|---|---|---|
| Munich | 10 May 2012 | Billet, Olivier |

EPO FORM 1503 03.82 (P04C01)

**EP 2 605 444 A1**

## ANNEX TO THE EUROPEAN SEARCH REPORT
## ON EUROPEAN PATENT APPLICATION NO.

EP 11 30 6692

10-05-2012

| Patent document cited in search report | | Publication date | Patent family member(s) | | Publication date |
|---|---|---|---|---|---|
| FR 2888690 | A1 | 19-01-2007 | EP | 1904921 A1 | 02-04-2008 |
| | | | FR | 2888690 A1 | 19-01-2007 |
| | | | US | 2009122980 A1 | 14-05-2009 |
| | | | WO | 2007006810 A1 | 18-01-2007 |
| EP 1291763 | A1 | 12-03-2003 | EP | 1291763 A1 | 12-03-2003 |
| | | | FR | 2829335 A1 | 07-03-2003 |
| | | | JP | 2003177668 A | 27-06-2003 |
| | | | US | 2003044014 A1 | 06-03-2003 |

EPO FORM P0459

For more details about this annex : see Official Journal of the European Patent Office, No. 12/82